# EUROPÄISCHE PATENTSCHRIFT

(11) **EP 1 369 755 B1**
(45) Veröffentlichungstag und Bekanntmachung des Hinweises auf die Patenterteilung: **29.10.2008**
(21) Anmeldenummer: 03012406.9
(22) Anmeldetag: 30.05.2003
(51) Int. Cl.: G05B 19/042, G05B 19/12

(54) **Mechanisches-Elektronisches Antriebssystem**
Mechanical-Electronic drive system
Système d'entrainement mécanique-électronique

(30) Priorität: 03.06.2002 DE 10224400
(43) Veröffentlichungstag der Anmeldung: 10.12.2003
(73) Patentinhaber: Lenze Drive Systems GmbH, 31855 Aerzen (DE)
(72) Erfinder: Tinebor, Manfred, 32683 Barntrup (DE); Boese, Matthias, 31855 Aerzen (DE); Tolksdorf, Andreas, 31789 Hameln (DE)
(74) Vertreter: Elbertzhagen, Otto

(56) Entgegenhaltungen:
- WO-A1-00/05806
- DE-U1- 9 313 750

## Beschreibung

Die Erfindung bezieht sich auf ein mechatronisches Antriebssystem, welches aus einer Mehr- oder Vielzahl von Antriebskomponenten und aus Antriebsreglern, die mit einer Auswahl von den Antriebskomponenten jeweils zu einer Antriebseinheit zusammenstellbar sind.

Ein mechatronisches System beruht auf der Kombination und/oder dem Zusammenwirken von mechanischen Vorrichtungen oder Maschinen und elektronischen Bauteilen oder Geräten. Die unterschiedlichen Antriebskomponenten eines dementsprechenden Antriebssystems haben jeweils ein spezifisches elektrisches, mechanisches und/oder thermisches Verhalten, welches sich durch Daten beschreiben läßt. Um eine aus den Antriebskomponenten zusammengestellte Antriebseinheit optimal betreiben zu können, ist die Kenntnis und die Berücksichtigung der Daten der Antriebskomponenten wichtig, um den Antriebsregler der jeweiligen Antriebseinheit hinsichtlich seiner Steuer- und Regelparameter optimal einstellen zu können. Wichtig sind aber nicht nur die Daten beispielsweise eines elektrischen Antriebsmotors, dazu gehören auch die der vorgeschalteten Filter- und Motorleitungen des gegebenenfalls vorhandenen Drehgebers und der mechanischen Bauteile wie Getriebe, Kupplung oder Bremse.

Bei den elektrischen Motoren handelt es sich vornehmlich um solche, die als Drehstrommotore an gesteuerten Frequenzumrichtern als Antriebsregler mit steuerbarer Drehzahl betrieben werden. Wenn das Verhältnis von Spannung zu Frequenz über eine Kennlinie, nämlich die U/f-Kennlinie, des Frequenzumrichters vorgegeben wurde, reichten bislang einige wenige Daten aus, um eine Drehzahlsteuerung einstellen zu können. Für die Einstellung einer präzisen, hochdynamischen Regelung einer aus ausgewählten Antriebskomponenten mit einem Antriebsregler zusammengestellten Antriebseinheit ist jedoch die Kenntnis des kompletten mechatronischen Antriebssystems erforderlich. So werden für eine feldorientierte Regelung eines Drehstrommotors bereits genaue Kenntnisse der elektrischen Motorparameter, wie Ständer- und Rotorwiderstand sowie Streu- und Hauptinduktivität, benötigt.

Es ist bekannt, diese Motorparameter durch Identifizierungsprogramme der Antriebsregler automatisch zu ermitteln. Die Identifizierungsprogramme können nur dann hinreichend genau arbeiten, wenn zwischen den Antriebsregler und den Antriebsmotor ein Filter nicht zwischengeschaltet ist. Werden EMV-, dU/dt-Filter oder Sinusfilter verwendet, können die Parameter des Drehstrommotors nicht ohne Kenntnis der Filterdaten vom Antriebsregler identifiziert werden. Ein Verfahren zur Identifizierung von Filterdaten durch den Antriebsregler gibt es bis jetzt nicht.

Die thermischen Parameter der Drehstrommaschine, deren Kenntnis für einen elektronischen Überlastschutz erforderlich sind, lassen sich entweder nicht oder nur extrem zeitaufwendig vom Antriebsregler ermitteln. Ebenfalls ist durch den Antriebsregler im drehzahlsensorlosen Betrieb der von der Polpaarzahl abhängige Parameter, der für die Umrechnung der elektrischen Drehzahl in die Wellendrehzahl benötigt wird, nicht ermittelbar.

Für eine dynamische und genaue Drehzahlregelung ist ferner die Kenntnis mechanischer Parameter erforderlich. Ein maßgeblicher Parameter für den Abgleich der Drehzahlregelung ist die Massenträgheit. Ein Identifizierungsprogramm hierfür kann die Massenträgheit aber nur dann ermitteln, wenn der Motor Drehbewegungen ausführen kann. Es gibt eine Reihe von Einsatzfällen, bei denen eine Drehbewegung des Antriebsmotors zur Identifizierung der Massenträgheit nicht möglich ist, weil z.B. das Lösen einer Haltebremse, wie sie an Hubwerken vorhanden ist, nicht erlaubt ist.

Es ist bekannt, in einen Antriebsmotor einen Datenspeicher zu integrieren, der motorspezifische Daten enthält, vergleiche DE 198 31 931 A1. Die gespeicherten Daten können vom Antriebsregler über eine Datenleitung ausgelesen werden, über die auch die von einem dem Motor zugeordneten Sensor gelieferten Rückführsignale geführt werden. Das bekannte Verfahren ist gut geeignet, um die Daten von Antriebsmotoren mit Drehzahlsensoren zu speichern, bereitzustellen und zu lesen. Für den drehzahlsensorlosen Betrieb von Motoren ist das Verfahren nicht geeignet, da eine Leitung für die Rückführsignale nicht vorhanden ist.

Es sind ferner Umrichter als Servoregler für Drehstrommotore bekannt, die mit einer Chipkartenschreib- und Leseeinheit versehen sind, wobei die Chipkarten die Einstellwerte der Umrichter enthalten, vergleiche DE 93 13 750 U1. Hierdurch ist die Einstellung des Umrichters zwar vereinfacht, Voraussetzung ist jedoch, daß im vorhinein optimale Einstellwerte an einer damit zusammengestellten Antriebseinheit gefunden wurden. Diese Einstellwerte sind dann auf mehrere Antriebseinheiten mit gleicher Konfiguration übertragbar. Für das erstmalige Ermitteln optimaler Einstellwerte muß man jedoch die Parameter der Antriebskomponenten kennen, oder man muß zahlreiche Optimierungsläufe für eine empirische Ermittlung der optimalen Einstellwerte durchführen. Ein Nachteil hierbei ist, daß sich nicht für jede denkbare Kombination und Konfiguration verschiedener Antriebskomponenten mit unterschiedlichen Parametern die optimalen Einstellwerte vom Hersteller des Antriebsreglers vorbestimmen lassen.

Aus dem Dokument WO 00/05806 A1 ist ein mechatronisches Antriebssystem der eingangs genannten Art bekannt, welches als Antriebskomponente eine elektrische Maschine mit einer Schmiereinrichtung und einen Antriebsregler mit einem Datenspeicher und einem Mikroprozessor aufweist. In den Datenspeicher des Antriebsreglers werden Daten eingelesen, die in einem programmierten Chip gespeichert sind, der an der elektrischen Maschine fest angeordnet und mittels einer Datenleitung mit dem Antriebsregler verbunden ist. Über diese Datenleitung werden die Betriebsparameter der elektrischen Maschine in den Antriebsregler eingelesen und unter Zuhilfenahme des damit zusammenwirkenden Mikrocomputers ausgewertet.

Der Erfindung liegt die Aufgabe zugrunde bei einem mechatronischen Antriebssystem dieser Art die Betriebsparameter der Antriebskomponenten auf Chipkarten zu speichern, die an den Antriebsreglern selbst mittels daran vorhandener Einrichtungen ausgelesen und ausgewertet werden können.

Diese Aufgabe wird bei einem mechatronischen Antriebssystem der vorgenannten Art dadurch gelöst, daß jeder einzelnen Antriebskomponente des Systems zumindest eine Chipkarte zugeordnet ist, auf der die Betriebsparameter der betreffenden Antriebskomponente gespeichert sind, wobei die Antriebsregler mit entsprechenden Chipkartenlesern versehen und auf eine Selbsteinstellung ihrer Steuer- und Regelparameter auf der Grundlage der von den Chipkarten der Antriebskomponenten eingelesenen Daten eingerichtet sind.

Für die Erfindung ist wesentlich, daß jeder der im System vorhandenen Antriebsregler die jeder im System verwendbaren Antriebskomponente zugeordnete Chipkarte auslesen und auswerten kann, um zur Erzielung optimaler Betriebseigenschaften mit Kenntnis der Parameterdaten der jeweiligen Antriebskomponenten selbstätig optimale Werte für seine eigenen Einstellparameter berechnen und bestimmen zu können. Die auf den Chiparten der Antriebskomponenten gespeicherten Daten sind nicht auf einen bestimmten Antriebsregler bezogen sondern können von unterschiedlichen Antriebsreglern des Systems ausgewertet werden. Bei den Antriebsreglern kann es sich um Frequenzumrichter, Servoregler oder Gleichstromrichter mit unterschiedlichen Einstellparametern handeln. Das erfindungsgemäße Antriebssystem eignet sich auch für Kombinationen von Antriebskomponenten, bei denen drehgeberlose Motore verwendet werden. So sind die auf den Chipkarten gespeicherten Daten ausschließlich auf die jeweils zugehörige Antriebskomponente bezogen und beschreiben deren Eigenschaften bzw. Betriebsparameter.

So speichern die Hersteller oder Lieferanten der Antriebskomponenten deren Daten auf den die Komponenten begleitenden Chipkarten. Es handelt sich bei jeder Antriebskomponente um alle relevanten Daten, die für deren Beschreibung und für deren zu berücksichtigende elektrische, mechanische und thermische Parameter erforderlich sind. Die Chipkarten werden zumindest bis zum Einsatz an der zugehörigen Antriebskomponente mitgeführt, zusammen mit dieser verpackt und versandt. Bei der Inbetriebnahme der zusämmengestellten Antriebseinheit werden die Chipkarten von den Antriebskomponenten entnommen und dem Chipartenleser zugeführt, der entweder in den Antriebsregler integriert oder an diesen angeschlossen ist. Die Daten können auch über einen PC ausgelesen werden, in jedem Falle werden die Daten der Antriebskomponenten der Antriebseinheit in den Speicher der Mikrorechnereinheit des Antriebsreglers übertragen. Unter Auswertung der Daten kann die Mikrorechnereinheit den Antriebsregler selbstätig auf eine optimale Steuerund Regelkonfiguration einstellen und die hierfür optimalen Einstellparameter berechnen. Die Betriebsdaten der Komponenten stehen somit bei der Inbetriebnahme der Antriebseinheit unmittelbar zur Verfügung, es muß nicht erst bei der Inbetriebnahme der Antriebseinheit ein Identifizierungsverfahren durchgeführt werden. Man erreicht somit eine Regelgüte, die ansonsten nur durch langwierige empirische Ermittlungen während der Erstinbetriebnahme der Antriebseinheit erreicht werden könnte.

Die Art und der Typ der für eine Antriebseinheit zusammengestellten Antriebskomponenten bestimmen die Wahl und die Einstellung der Steuer- und der Reglerkonfiguration des Antriebsreglers. Für die Einstellung des Drehmomentenregelkreises berücksichtigt der Antriebsregler die elektrischen Parameter von Filter, Zuleitung und Antriebsmotor. Hiermit ist, jedenfalls bei einem an einem Frequenzumrichter betriebenen Drehstrommotor, eine exakte Feldorientierung einer modellbasierten Regelung auch ohne Drehzahlsensor möglich. Für die Einstellung der Drehzahlregelung werden mechanische Parameter des Motors und der weiteren Antriebskomponenten, wie Getriebe, Kupplungen und ggf. Geber berücksichtigt. Die Kenntnis der mechanischen Parameter erlaubt modellbasierte Vorsteuerungen, die eine hochdynamische Drehzahlregelung ermöglichen. Durch Berücksichtigung mechanischer Parameter, wie Lose oder Steifigkeit in der Lageregelung, werden präziser Gleichlauf und exakte Positionierungen trotz mechanischer Unzulänglichkeiten erreichbar. Die Kenntnis der dynamischen Parameter einer Haltebremse erlauben insbesondere eine ruckfreie Drehmomentenübergabe zwischen dem Antriebsmotor und der Bremse an Hubwerken.

Welche Daten für die Antriebskomponenten bereitgestellt und auf der zugehörigen Chipkarte gespeichert werden, ergibt sich aus den nachstehenden Beispielen.

Die Daten eines Getriebes beinhalten u.a.:
- Getriebetyp
- Übersetzung
- Drehzahlgrenze
- Massenträgheit [kgm²]
- Steifigkeit [Nm/rad]
- Reststeifigkeit [Nm/rad]
- Grenzwinkel der Reststeifigkeit [rad]
- Spiel der Abtriebswelle [rad]
- Dämpfung [rad*s]
- Statisches Reibungsmoment [Nm]
- Dynamisches Reibungsmoment [Nm*s]
- Spiel der Abtriebswelle [rad]

Die Chipkarte einer vorkonfektionierten Motorleitung enthält z.B. Daten über deren Länge und deren Leitungsbeläge wie
- Widerstand [Ohm]
- Induktivität [H]
- Ader- und Schirmkapazitäten [F]

Die dynamischen Parameter einer Haltebremse, die als Daten auf der Chiparte gespeichert werden sind z.B.
- Öffnungszeit [s]
- Schließzeit [s]

Als weitere Ausgestaltung der Erfindung kommt die Abspeicherung von Daten auf ggf. weiteren Chiparten in Betracht, die bestimmte Prozesse betreffen, wie die Positionierung von Werkzeugträgern, die Steuerung von Kurvenscheiben, die Wickelgeschwindigkeit einer Wickelmaschine, den Hub- oder Senkbetrieb eines Hubwerks unter bestimmten Bedingungen, um nur einige Beispiele zu nennen. In diesen Fällen kann die Chiparte die Parameter der Prozesse selbst enthalten oder in der Mikrorechnereinheit des Antriebsreglers Parameterrahmen freischalten, in die der Anwender die relevanten Prozeßparameter einträgt.

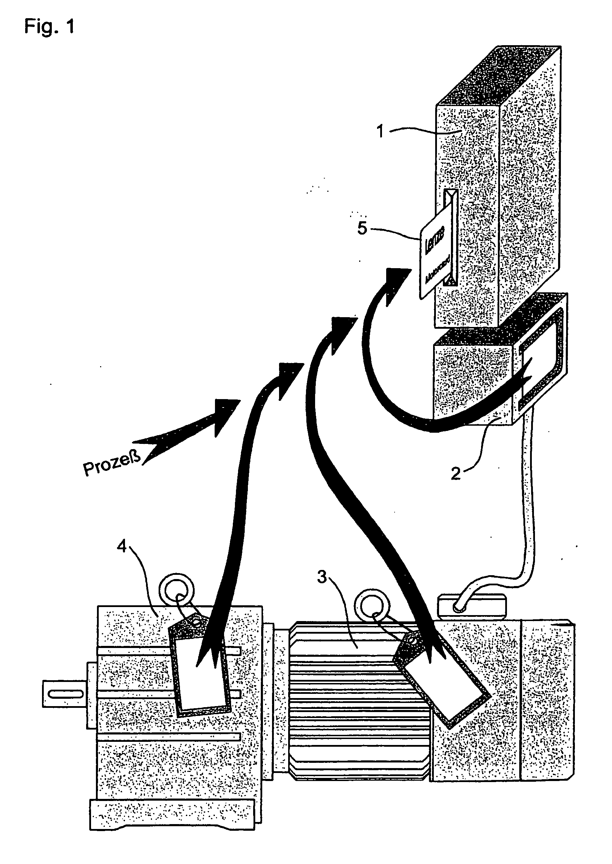

In der als Fig. 1 beiliegenden Zeichnung ist eine schematische Anordnung einer zusammengestellten Antriebseinheit wiedergegeben, um das erfindungsgemäße Prinzip zu veranschaulichen.

Der mit 1 bezeichnete Antriebsregler ist mit einem integrierten Chipkartenleser ausgestattet. Unterhalb des Antriebsreglers 1 bei dem es sich um einen Frequenzumrichter handelt, ist ein Motorfilter 2 dargestellt, das für unterschiedliche Aufgaben bestimmt sein kann. Zum einen kann ein solches Filter der elektromagnetischen Verträglichkeit dienen, um z.B. von der betreffenden Antriebseinheit ausgehende Störeinflüsse auszuschalten. Weiter kann ein solches Filter zwecks einer Geräuschminderung bei einer frequenzgesteuerten Drehstrommaschine vogesehen werden, um bestimmte Frequenzen auszublenden, welche beim Betrieb der Drehstrommaschine besonders lästige Geräusche erzeugen. Ein derartiges Filter 2 ist ebenso eine Antriebskomponente wie der Drehstrommotor 3 selbst, an den als weitere Antriebskomponente ein Getriebe 4 angeflanscht ist. Die hier beispielhaft gewählten Antriebskomponenten 2, 3 und 4 sind je mit zumindest einer zugehörigen Chipkarte versehen, die bei der Erstinbetriebnahme der zusammengestellten gesamten Antriebseinheit, die den Antriebsregler 1 mitumfaßt, in den Speicher der Mikrorechnereinheit eingelesen werden, die in den Antriebsregler integriert ist. Hierzu ist in der Zeichnung angedeutet, wie eine der Chipkarten 5 in den am Antriebsregler 1 befindlichen Kartenleser eingegeben wird.

## Patentansprüche

1. Mechatronisches Antriebssystem bestehend aus einer Mehr-oder Vielzahl von Antriebskomponenten (2 - 4), wie Motore, Getriebe, Kupplungen, Bremsen und dergl., und aus Antriebsreglern (1), die mit einer Auswahl von den Antriebskomponenten (2 - 4) jeweils zu einer Antriebseinheit zusammenstellbar sind, wobei für jede der Antriebskomponenten (2 - 4) Betriebsparameter bereitgestellt und die Antriebsregler (1) jeweils mit einer Mikrorechnereinheit mit einem Speicher versehen sind, in den bei einer zusammengestellten Antriebseinheit die Betriebsparameter der verwendeten Komponenten (2 - 4) eingelesen und zur Steuerung der Komponenten (2 - 4) ausgewertet werden, und wobei die Mikrorechnereinheiten der Antriebsregler (1) auf die Auswertung aller im System vorkommenden und in deren Speicher einlesbaren Betriebsparameter der verfügbaren Antriebskomponenten (2 - 4) eingerichtet sind,
**dadurch gekennzeichnet,**
**daß** jeder einzelnen Antriebskomponente (2 - 4) des Systems zumindest eine Chipkarte (5) zugeordnet ist, auf der die Betriebsparameter der betreffenden Antriebskomponente (2 - 4) gespeichert sind, daß die Antriebsregler (1) mit entsprechenden Chipkartenlesern versehen und auf eine Selbsteinstellung ihrer Steuer- und Regelparameter auf der Grundlage der von den Chipkarten (5) der Antriebskomponenten (2 - 4) eingelesenen Daten eingerichtet sind.

2. Antriebssystem nach Anspruch 1,
**dadurch gekennzeichnet,**
**daß** die Chipkartenleser in die Antriebsregler (1) integriert sind.

3. Antriebssystem nach Anspruch 1,
**dadurch gekennzeichnet,**
**daß** die Chipkartenleser als von den Antriebsreglern (1) getrennte Geräte ausgeführt und mit den Antriebsreglern (1) verbunden sind.

4. Antriebssystem nach Anspruch 1,
**dadurch gekennzeichnet,**
**daß** der jeweilige Chipkartenleser an einem PC angeschlossen und dieser mit der Steuerung in dem zugehörigen Antriebsregler (1) verbunden ist.

## Claims

1. Mechanical electronic drive system, comprising a plurality or multitude of drive components (2 - 4) such as motors, gears, clutches, brakes and the like, and comprising drive controls (1) which can be put together with a selection of the drive components (2 - 4) to form a respective drive unit, wherein operating parameters are provided for each of the drive components (2 - 4) and the drive controls (1) are each provided with a microcomputer unit with a memory, into which the operating parameters of the components (2 - 4) used in the assembled drive unit are read and evaluated for control of the components (2 - 4), and wherein the microcomputer units of the drive controls (1) are designed to evaluate all operating parameters of the available drive components (2 - 4) arising in the system and that can be read into the memory,
**characterised in that**
at least one chip card (5) is assigned to each individual drive component (2 - 4) of the system, on which the operating parameters of the relevant drive component (2 - 4) are stored, **in that** the drive controls (1) are provided with corresponding chip card readers and designed for self-setting of their control and regulating parameters on the basis of the data read by the chip cards (5) of the drive components (2 - 4).

2. Drive system according to claim 1,
**characterised in that**
the chip card readers are integrated into the drive controls (1).

3. Drive system according to claim 1,
**characterised in that**
the chip card readers are designed as units separate from the drive controls (1) and connected to the drive controls (1).

4. Drive system according to claim 1,
**characterised in that**
the respective chip card reader is connected to a PC and the latter is connected to the control in the associated drive control (1).

## Revendications

1. Système d'entraînement mécanique-électronique consistant en plusieurs ou en un grand nombre de composants d'entraînement (2 - 4), tels que moteurs, engrenages, accouplements, freins et analogues, et régleurs d'entrainement (1), qui peuvent être respectivement combinés avec un choix de composants (2 - 4) pour former une unité d'entrainement, des paramètres de commande étant disponibles pour chacun des composants d'entraînement (2 - 4) et les régleurs d'entrainement (1) étant pourvus chacun d'une unité de calcul avec une mémoire dans laquelle, pour une unité d'entraînement composée, les paramètres de service des composants (2 - 4) utilisés sont lus et évalués pour la commande des composants (2 - 4), et les unités de calcul des régleurs d'entraînement (1) étant adaptés à l'évaluation de tous les paramètres de service des composants d'entraînement (2 - 4) disponibles, présents dans le système et pouvant être lus dans leurs mémoires,
**caractérisé en ce que,**
à chacun des composants d'entraînement (2 - 4) du système, est associée une carte à puce (5), sur laquelle sont mémorisés les paramètres de service des composants d'entraînement (2 - 4) concernés, que les régleurs d'entraînement (1) sont pourvus de lecteurs de cartes à puce appropriés et sont adaptés à un autoréglage de leurs paramètres de commande et de réglage sur la base des données lues des cartes à puce (5) des composants d'entraînement (2 - 4).

2. Système d'entraînement selon la revendication 1, **caractérisé en ce que** les lecteurs de cartes à puce sont intégrés dans les régleurs d'entraînement (1).

3. Système d'entraînement selon la revendication 1, **caractérisé en ce que** les lecteurs de cartes à puce sont réalisés en tant qu'appareils séparés des régleurs d'entraînement (1) et sont reliés aux régleurs d'entraînement (1).

4. Système d'entraînement selon la revendication 1, **caractérisé en ce que** le lecteur de cartes à puce respectif est raccordé à un PC et que celui-ci est relié à la commande dans le régleur d'entraînement (1) y associé.
